Europäisches Patentamt

European Patent Office

Office européen des brevets

(11) Publication number: **0 050 511**
A2

# (12) EUROPEAN PATENT APPLICATION

(21) Application number: 81304878.2

(51) Int. Cl.³: **H 02 G 3/24,** H 02 G 3/04

(22) Date of filing: **19.10.81**

(30) Priority: **20.10.80 GB 8033784**
**27.10.80 GB 8034567**
**26.11.80 GB 8037912**

(43) Date of publication of application: **28.04.82**
**Bulletin 82/17**

(84) Designated Contracting States: **AT BE CH DE FR IT LI LU NL SE**

(71) Applicant: **BICC Limited, 21, Bloomsbury Street, London, WC1B 3QN (GB)**

(72) Inventor: **Marsh, James, 28 Mossbank Road Moss Bank, St. Helens Merseyside (GB)**
Inventor: **Deihees, Peter, 63 Beauclair Drive, Liverpool 15 Merseyside (GB)**

(74) Representative: **Poole, Michael John et al, BICC Limited Patents Department 38 Wood Lane, London, W12 7DX (GB)**

(54) **A spacer for supporting a heat detector cable.**

(57) A spacer (1) for supporting a heat detector cable (14) has a cable tie (15) connected to a column (2) which is integral with an element (9) to secure the spacer to a cable tray. The securing element is preferably a T-shaped member extending from the column to lock into an aperture in the tray. This spacer enables simple and fast attachment and detachment with the tray, and the heat detector cable can be located either above or below the tray.

"A Spacer for Supporting a Heat Detector Cable"

The present invention relates to a spacer to hold a heat detector cable at a distance from a cable tray.

When vertically spaced cable trays are used in certain circumstances, e.g. to hold power cables in generating stations or oil rigs, in order that heat losses from cables, including heat rising convectively from cables in lower trays, do not produce over-heating, heat detecting cables are often installed between (and above) the cable trays. These cables are designed to short circuit if a fire occurs or the local air temperature at any point reaches a critical level and then to trigger an alarm system. The heat detecting cables are supported either below or above the trays, typically by downwardly extending tubes about each of which the cable is wound once or twice. This arrangement wastes a lot of cable, is slow and inconvenient to erect and change; moreover it is hard to re-attach a cable which becomes detached from a tube.

An alternative support for the heat detecting cable is a steel strip and cleat hanging from an upper tray. This arrangement can interfere with operation by putting the detector in effective thermal contact with the metal of the cable tray; moreover the detector can readily swing, risking abrasion.

The present invention provides a spacer for supporting a heat detector cable comprising a cable tie connected to a column integral with means to secure it to a cable tray, said securing means being spaced along the column from the cable tie.

Thus the cable can be supported either above or below the column without being wound on the column thereby decreasing the amount of cable used. Moreover more than one cable can be supported on the spacer at any one time; and cables can be added or taken away with ease. Preferably the cable tie is not integral with the column.

Preferably the securing means is a T-shaped member extending from the column to lock into an aperture in a cable tray. The column may have a cruciform section.

In order that the invention may more readily be understood, a description is now given, by way of example only, reference being made to the accompanying drawings, in which:

Figure 1 is an elevational view of a spacer of the present invention holding a cable;

Figure 2 is a view in the direction indicated by arrows II-II in Figure 1;

Figure 3 is a view in the direction indicated by arrows III-III in Figure 1;

Figure 4 is a plan view of a modification of the spacer in Figure 1;

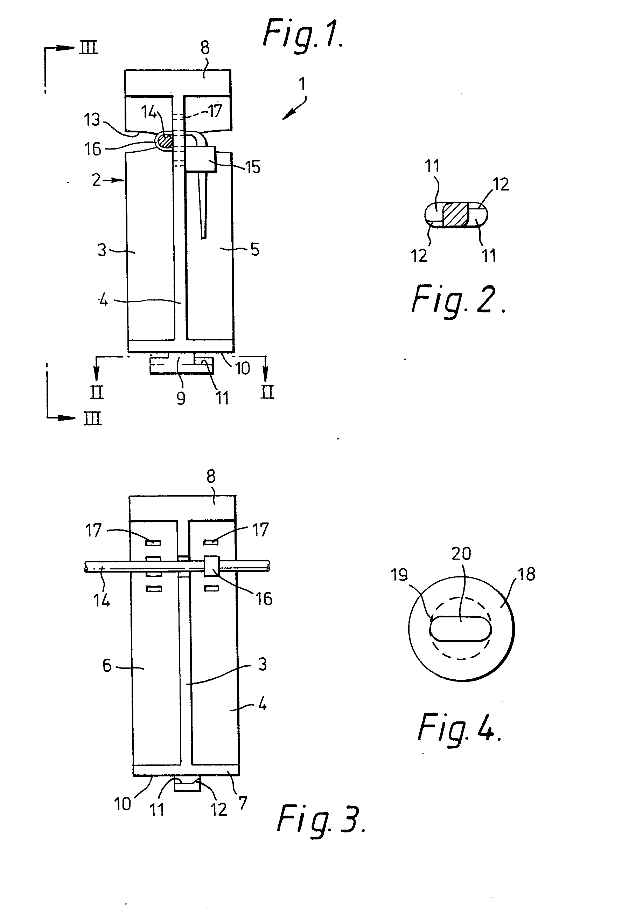

The spacer (generally designated 1) illustrated in Figures 1 to 3 consists of a one-piece polypropylene moulding and a separate cable tie. The moulding has a column 2 with a cruciform section formed by mutually perpendicular arms 3, 4, 5, 6. Each end of the column 2 includes a circular plate 7, 8 with a radius equal to the length of each arm.

A T-shaped foot 9 extends from the outer surface 10 of the end of the plate 7 and has a bearing surface 11 (facing and generally parallel to plate 7) with ridges 12 extending along the length of surface 11 adjacent one edge. Thus the spacer 1 can be securely held in an elongate aperture of a cable tray by positioning the foot 9 within and extending longitudinally of the aperture in the tray and then rotating the spacer 1 until foot 9 extends transversely of the aperture, thereby gripping the tray between plate surface 10 and bearing surface 11.

Arm 3 has a U-shaped notch 13 in which a heat detecting cable 14 is held by a separate cable tie 15 whose toothed strap 16 passes over cable 14 and through two of a number of slots 17 in arm 4 and is locked in the tie head. As any two of the slots 17 can be used and as the size of the holding loop of tie 15 is greatly variable, a very wide range of cable sizes can be held securely. The tie 15 also enables a wide range of clamping forces to be achieved.

A notch 13 on arm 5, and a series of slots 17 on arm 6, are also provided in order to enable a cable to be alternatively held on the other side of spacer 1.

A second cable tie can be passed through two of the slots 17 in arm 6 to hold cable 14 even more securely.

The illustrated spacer 1 can be modified to have a single notch and one series of slots, or to have two notches of differing sizes thereby increasing the range of cable sizes which can be accommodated and/or to have the two notches longitudinally spaced apart on column 2. In another modification the column 2 and end plates 7, 8 are moulded separately and then assembled by ultrasonic welding or adhesion. In another modification, the column 2 and end plates 7, 8 are moulded on a single unit, and foot 9 is subsequently attached by ultrasonic welding or adhesion thereby enabling a range of sizes and shapes of foot to be available.

In use, a plurality of these spacers 1 are attached along the length of a cable tray at a spacing of about 2 metres and then heat detector cable 14 is secured to each of the spacers in turn so that it is held parallel to, but spaced from, the cable tray and its contents. The spacers 1 can extend either upwardly or downwardly from the cable tray with which they engage. When a spacer extends upwardly it can serve the additional purpose of defining a ventilation space between adjacent cables on the tray.

The cable 14 can be quickly attached to and detached from the spacer 1, and more than one cable 14 can be supported by each spacer 1.

In a modified spacer, shown in Figure 4, outer surface 18 of end plate 8 has an aperture 14 (of shape and dimensions comparable to the profile shown in Figure 2 of foot 9) which opens into a circular space 20 of diameter equal to the length of that profile. Thus two modified spacers can be securely joined together by placing the foot 9 of one through aperture 19 and into space 20 of the other and then rotating them relatively through 90 degrees so that surfaces 10 and 11 of the one spacer clamp between part of surface 13 of the other. The spacers can be readily detached by another relative rotation through 90 degrees. Alternatively, two spacers can be longitudinally joined by cutting off foot 9 of one to produce a flat surface (or foot 9 and the end of plate 7) and then ultrasonically welding it to end plate 8 of the other spacer.

Spacers are preferably joined so that adjacent ones have orientations about the longitudinal axis differing by 90 degrees so that the presence of notches 13 do not produce any appreciable cumulative weakness, and the relative positions of the slot 20 and foot 9 in the Figure 4 version should be appropriately arranged.

The spacers described above are cheap, easily manufactured components providing the basis of a strong cable support installation which can be quickly and easily assembled, dismantled and changed.

## CLAIMS

1. A spacer for supporting a heat detector cable comprising a cable tie connected to a column integral with means to secure it to a cable tray, said securing means being spaced along the column from the cable tie.

2. A spacer according to Claim 1, wherein the tie is not integral with the column.

3. A spacer according to Claim 1 or Claim 2, wherein the securing means is a T-shaped member extending from the column to lock into an aperture in a cable tray.

4. A spacer substantially as hereinbefore described with reference to and as illustrated in Figures 1, 2 and 3, or Figures 1, 2, 3 and 4, of the accompanying drawings.

0050511

1/1

Fig.1.

Fig.2.

Fig.3.

Fig.4.